Europäisches Patentamt

European Patent Office

Office européen des brevets

(19)

(11) Veröffentlichungsnummer: **0 411 320 A1**

(12) **EUROPÄISCHE PATENTANMELDUNG**

(21) Anmeldenummer: 90112404.0

(22) Anmeldetag: 29.06.90

(51) Int. Cl.5: **B60T 8/32**, B60T 13/14

(30) Priorität: 03.08.89 DE 3925649

(43) Veröffentlichungstag der Anmeldung:
06.02.91 Patentblatt 91/06

(84) Benannte Vertragsstaaten:
**DE ES GB SE**

(71) Anmelder: **ROBERT BOSCH GMBH**
**Postfach 10 60 50**
**D-7000 Stuttgart 10(DE)**

(72) Erfinder: **Willmann, Karl-Heinz, Dipl.-Ing.**
**Arndtstrasse 45**
**D-7149 Freiberg/N(DE)**

(54) Verfahren zur Regelung eines Bremsdrucks in einer Bremskammer.

(57) Bei einem Verfahren zur Regelung eines Bremsdruckes in einer Bremskammer (15, 16) mittels eines Hauptbremszylinderkolbens (12) ist diesem Hauptbremszylinderkolben (12) eine Pedal- (2) bzw. Kolbenstange (10) zugeordnet, die von einer auf ein Bremspedal (1) wirkenden Bremskraft beaufschlagt wird. Der Hauptbremszylinderkolben (12) wird bei Beaufschlagung des Bremspedals (1) mit Bremskraft abhängig von dem Pedalweg unter Druck gesetzt und legt einen größeren Weg zurück als die Pedal- (2) bzw. Kolbenstange (10).

EP 0 411 320 A1

## VERFAHREN ZUR REGELUNG EINES BREMSDRUCKES IN EINER BREMSKAMMER

Stand der Technik

Die Erfindung betrifft ein Verfahren zur Regelung eines Bremsdruckes entsprechend dem Oberbegriff von Anspruch 1 sowie eine diesbezügliche Bremsanlage.

Ein derartiges Verfahren ist beispielsweise aus der US-PS 4,660,897 bekannt. In dem dort gezeigten Bremssystem kann sowohl eine Antiblockier- wie auch eine Antriebsschlupfregelung stattfinden. Der Hauptbremszylinderkolben wirkt direkt mit der vom Bremspedal beaufschlagten Pedal- bzw. Kolbenstange zusammen, wobei zwischen Bremspedal und Hauptbremszylinderkolben eine Einrichtung zur Regelung der Servobremskraft vorgesehen ist.

Bei diesen bekannten Verfahren bzw. Bremsanlagen wirkt sich nachteilig aus, daß der Druck auf den Hauptbremszylinderkolben ausschließlich von der Kolbenstange bewirkt wird. Insbesondere dann, wenn noch ein Servobremskraftverstärker zwischen Pedal und Hauptbremszylinderkolben eingeschaltet ist, ist bei Ausfall dieses Bremskraftverstärkers ein wesentlich erhöhter Pedaldruck notwendig, um die gleiche Bremswirkung zu erzielen.

Vorteile der Erfindung

Die vorliegende Erfindung hat den wesentlichen Vorteil, daß die Beaufschlagung des Hauptbremszylinderkolbens mit Bremskraft nicht mehr ausschließlich durch die zwischen Bremspedal und Hauptbremszylinder angeordnete Pedal- bzw. Kolbenstange erfolgt. Erfindungsgemäß wird der Hauptbremszylinderkolben bei einer Beaufschlagung des Bremspedals mit Bremskraft abhängig vom Weg des Bremspedals unter Druck gesetzt und legt dabei erfindungsgemäß einen größeren Weg zurück, als die vom Bremsdruck direkt über das Bremspedal betätigte Pedal- bzw. Kolbenstange.

D.h., im vorliegenden Fall wirkt die Bremskraft auf das Bremspedal nicht unmittelbar über die Pedal- bzw. Kolbenstange auf den Hauptbremszylinderkolben, sondern vor dem Hauptbremszylinder wird ein Druck entsprechend dem Pedalweg in einer Druckkammer aufgebaut, deren Druck zwar ebenfalls vom Pedalweg bzw. Bremskraft auf das Pedal bestimmt wird. Dies geschieht jedoch über einen von einer Steuereinheit gesteuerten Druckaufbau. Insbesondere bei der Anordnung eines Servobremskraftverstärkers zwischen Bremspedal und Hauptbremszylinder ist dies von erheblichem Vorteil. Bei Servoausfall wird so ein Übersetzungssprung erreicht, d.h., bei Servoausfall ist dem Pedalweg ein kleinerer Weg des Hauptbremszylinderkolbens zugeordnet als bei Servobetrieb, d.h., bei Servoausfall kann mit einer relativ geringeren Pedalkraft ein nach wie vor hoher Bremsdruck auf die entsprechenden Radbremszylinder erzielt werden.

Zur besseren Regelung des Druckaufbaus vor dem Hauptbremszylinderkolben ist es wünschenswert, sowohl den Pedalweg wie auch den Weg des Hauptbremszylinderkoltens zu ermitteln. Diese Ist-Werte werden dann von einer Steuereinheit mit Soll-Werten verglichen, so daß der vom Hauptbremszylinderkolben zurückzulegende weitere Weg genau ermittelt und gesteuert werden kann.

Bei einer entsprechenden Bremsanlage soll in einem Hauptbremszylinder zumindest ein Hauptbremszylinderkolben und eine Bremskammer zur Bremsdruckbeaufschlagung von Radbremszylindern unter Zwischenschaltung von entsprechenden, für insbesondere die Antiblockierregelung notwendigen Ventilen vorgesehen sein, wobei der Bremsdruck von einem Bremspedal auf eine Pedal- bzw. Kolbenstange einwirkt. Erfindungsgemäß ist dem Hauptbremszylinderkolben ein Druckraum vorgeschaltet, der über eine Leitung mit einem Vorratsbehälter für Druckmedium in Verbindung steht. Zum Einbringen dieses Druckmediums in den Druckraum vor dem Hauptbremszylinderkolben dient bevorzugt eine Pumpe, welche beispielsweise über einen entsprechenden Elektromotor betrieben wird. Ferner sind Ventile vorgesehen, welche ein Steuern der Zu- bzw. Rückführung des Druckmediums gewährleisten. Das Ansteuern der Ventile geschieht über die oben genannte Steuereinheit.

Die Wirkungsweise der Erfindung ist folgende:

Wird das Bremspedal mit Bremskraft beaufschlagt, so erfaßt der Wegsensor diese Bewegung des Bremspedals und leitet sie an die Steuereinheit weiter. Gleichzeitig wird das Ventil zwischen Pumpe und Druckraum vor dem Hauptbremszylinderkolben auf Durchlaß geschaltet und der Hauptbremszylinderkolben unter Bremsdruck durch das Druckmedium in dem Druckraum gesetzt. Den Weg des Hauptbremszylinderkolbens erfaßt der ihm zugeordnete Wegsensor und gibt die Werte an die Steuereinheit zurück. Dort werden die entsprechenden Werte der Wegsensoren miteinander verglichen und so der gewünschte Soll-Weg des Hauptbremszylinderkolbens exakt eingestellt.

Fällt beispielsweise der Servobremskraftverstärker aus, so ist durch diese elektronisch gesteuerte Bremskraftver stärkung direkt auf den Hauptbremszylinderkolben ein Übersetzungssprung ohne zusätzliche Einrichtungen möglich. Ferner ergibt sich nun die Möglichkeit, sowohl eine Antiblockier- wie auch eine Antriebsschlupfregelung auf sehr einfachem Wege ohne zusätzlichen Aufwand zu modulieren. Um diese Modulierung bei Auftreten eines Antiblockierfalles nicht zu stören, ist vorgesehen, daß die Pedal- bzw. Kolbenstange arretiert wird, so daß eine versuchte weitere Bremsdruckerhöhung über das Bremspedal ohne Wirkung bleibt. Dies geschieht der Einfachheit halber durch Sperrung des Zu- bzw. Abflusses von Druckmedium zu einer entsprechenden Servokammer, in der ein mit der Pedal- bzw. Kolbenstange verbundener Servobremskolben gleitet. Im Falle der Antiblockierregelung wird diese Servokammer über das entsprechende Ventil unter Druck gesetzt und so das Bremspedal zurückgeführt. Gleichzeitig kann durch Umschalten des entsprechenden Ventils der Druckraum vor dem Hauptbremszylinderkolben entlastet und so der Hauptbremszylinderkolben zurückgeführt werden. Die Modulierung des entsprechenden Bremsdruckes direkt an den Radbremszylindern erfolgt dann mittels der den Radbremszylindern vorgeschalteten Ventilen nach dem sogenannten hydraulischen Multiplexverfahren.

Im Falle der Antriebsschlupfregelung werden die Ventile der Radbremszylinder der nicht angetriebenen Räder geschlossen und der Druck in dem dem Hauptbremszylinderkolben vorgeschalteten Druckraum moduliert. Die Regelung des Drucks in den Radbremszylindern der Antriebsräder erfolgt dann wieder mit Hilfe des hydraulischen Multiplexverfahrens.

Der relativ einfache Aufbau der gesamten Bremsanlage gewährleistet insbesondere eine sichere Funktion auch bei Ausfall einzelner Bereiche.

Zeichnung

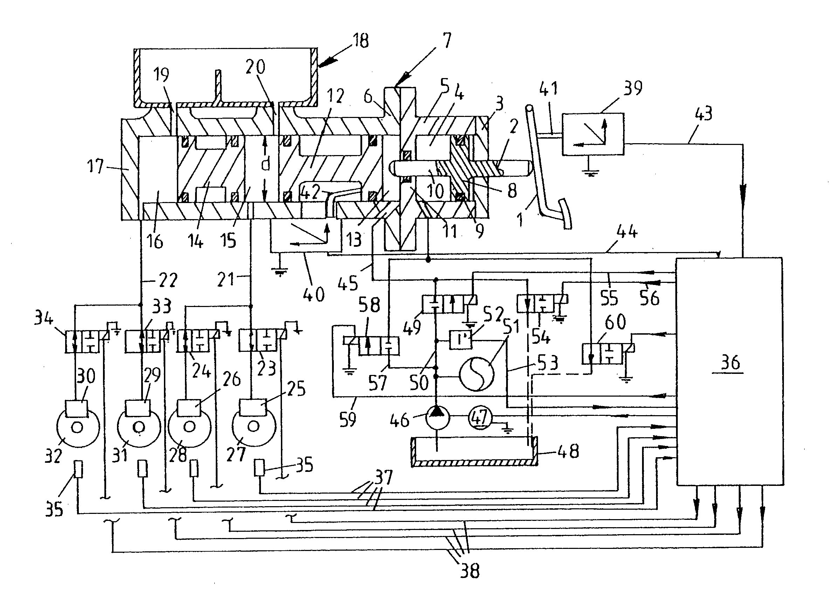

Die Erfindung wird nachfolgend anhand der Zeichnung näher erläutert. Diese zeigt in ihrer einzigen Figur eine blockschaltbildliche Darstellung einer Bremsanlage mit einem schematisch im Längsschnitt dargestellten Hauptbremszylinder.

Über ein Bremspedal 1 kann eine Pedalstange 2 mit Bremskraft beaufschlagt werden. Diese Pedalstange 2 durchgreift einen Deckel 3, welcher eine Servobremskammer 4 verschließt. Diese Servobremskammer 4 wird von einem Gehäuseteil 5 gebildet, welches an ein Hauptgehäuseteil 6 des Hauptbremszylinders 7 angeflanscht ist.

In der Servobremskammer 4 gleitet unter dem Druck der Pedalstange 2 ein Servobremskolben 8, welcher sich über eine entsprechende Ringdichtung 9 gegen die Innenwand der Servobremskammer 4 abstützt.

Andernends der Pedalstange 2 schließt an den Servobremskolben 8 eine weitere Kolbenstange 10 an, welche einen Boden 11 des Gehäuseteils 5 bzw. der Servobremskammer 4 durchgreift und in das Hauptgehäuseteil 6 eindringt. Dort ist dieser Kolbenstange 10 ein erster Hauptbremszylinderkolben 12 zugeordnet, jedoch nicht mit der Kolbenstange 10 verbunden. Dieser erste Hauptbremszylinderkolben 12 bildet zum einen mit dem Boden 11 einen Druckraum 13 aus und zum anderen mit einem zweiten Hauptbremszylinderkolben 14 eine erste Bremskammer 15. An den zweiten Hauptbremszylinderkolben 14 schließt dann die zweite Bremskammer 16 an, die von einem Boden 17 des Hauptbremszylinders 7 bzw. des Hauptgehäuseteils 6 abgeschlossen wird.

Weitere Elemente zur Zurückführung der ersten und zweiten Hauptbremszylinderkolben 12 bzw. 14 und zur Verbindung von beiden Kolben sind der Übersichtlichkeit halber vernachlässigt.

Bremsflüssigkeit gelangt aus einem Vorratsbehälter 18 über entsprechende Eingangsbohrungen 19 bzw. 20 in die erste bzw. zweite Bremskammer 15 bzw. 16. An jede Bremskammer 15 bzw. 16 schließt eine Bremsleitung 21 bzw. 22 an, wobei die Bremsleitung 21 über ein Magnetventil 23 bzw. 24 Radbremszylinder 25 bzw. 26 an nur schematisch angedeuteten Rädern 27 bzw. 28 mit Bremsflüssigkeit versorgt.

Ebenso sind Radbremszylinder 29 bzw. 30 für Räder 31 bzw. 32 über entsprechende Magnetventile 33 bzw. 34 und die Bremsleitung 22 mit der zweiten Bremskammer 16 verbunden.

Die Tätigkeit der Räder 27,28,31 und 32 wird von Radsensoren 35 überwacht, wobei jeder Radsensor 35 gesondert mit einer Steuereinheit 36 über eine Leitung 37 verbunden ist. Diese Steuereinheit 36 übernimmt auch die Ansteuerung der Magnetventile 23,24,33 und 34 über entsprechende Leitungen 38. Wesentliche Aufgabe der Magnetventile 23,24,33 und 34 ist die Antiblockierregelung bei Feststellung des Blockierens von Rädern durch die Radsensoren 35, wobei im Falle der Blockierung das entsprechende Magnetventil 23,24,33,34 über die Steuereinheit 36 in Schließstellung geschaltet werden kann. Diese Regelung ist allgemeiner Stand der Technik, weshalb darauf nicht näher eingegangen wird.

Sowohl dem Bremspedal 1 wie auch dem ersten Hauptbremszylinderkolben 12 ist jeweils ein Wegsensor 39 bzw. 40 zugeordnet. Dieser Wegsensor 39 bzw. 40 erfaßt über entsprechende Abtaster 41 bzw. 42 jeweils den Weg, den das Bremspedal 1 bzw. der erste Hauptbremszylinderkolben 12 zurücklegt. Dieser Weg wird dann über einen entsprechenden Anschluß 43 bzw. 44 an die Steuereinheit 36 gemeldet.

Der oben erwähnte Druckraum 13 zwischen dem ersten Hauptbremszylinderkolben 12 und dem Boden 11 des Gehäuseteils 5 kann über eine Versorgungsleitung 45 mit Druckmedium beaufschlagt werden. Dieses Beaufschlagen geschieht über eine Pumpe 46, welche von einem Motor 47 betrieben wird. Dabei entnimmt die Pumpe 46 Druckmedium aus einem Vorratsbehälter 48 und führt dieses nach Umschalten eines Magnetventils 49 in den Druckraum 13. In die Leitung 50 zwischen Pumpe 46 und Magnetventil 49 ist noch ein Speicher 51 und ferner ein Druckbegrenzungsventil 52 eingeschaltet, welch letzteres mit der Steuereinheit 36 über eine Leitung 53 in Verbindung steht. Die Rückführung des Druckmediums aus dem Druckraum 13 über die Versorgungsleitung 45 erfolgt über ein weiteres Magnetventil 54 in den Vorratsbehälter 48. Beide Magnetventile 49 bzw. 54 stehen über entsprechende Verbindungen 55 bzw. 56 mit der Steuereinheit 36 in Kontakt.

Beim Betätigen des Bremspedals 1 wird durch ein Öffnen des Magnetventils 49 und Schließen des Magnetventils 54 Druckmedium über die Versorgungsleitung 45 in den Druckraum 13 eingeführt. Hierdurch erfolgt ein Verfahren des ersten Hauptbremszylinderkolbens 12 getrennt von einer Druckbeaufschlagung durch die Kolbenstange 10 so weit, bis der von der Steuereinheit 36 gewünschte Soll-Weg erreicht ist. Dies geschieht durch einen Vergleich der Werte, die von den Wegsensoren 39 bzw. 40 erhalten werden.

Der Soll-Weg des ersten Hauptbremszylinderkolbens 12 ist größer als der Weg der Pedalstange 2, wodurch erreicht wird, daß mit einem relativ kleinen Durchmesser d des Hauptbremszylinders 7 das notwenige Volumen an Bremsflüssigkeit verdrängt werden kann. Hierdurch wird ein Übersetzungssprung bei einem Servoausfall erreicht, da bei diesem Servoausfall dem Pedalweg ein kleinerer Weg des ersten Hauptbremszylinderkolbens 12 zugeordnet ist als bei Servobetrieb. Dies bedeutet, daß bei Servoausfall mit geringerer Pedalkraft ein hoher Druck in den Bremskammern 15 bzw. 16 erzeugt werden kann.

Des weiteren ist von der Leitung 50 zwischen Pumpe 46 und Magnetventil 49 eine Abzweigung 57 vorgesehen, welche einen Anschluß für das Druckmedium aus dem Vorratsbehälter 48 zur Servobremskammer 4 bildet. In diese Abzweigung 57 ist ein weiteres Magnetventil 58 eingeschaltet, welches über eine Steuerleitung 59 mit der Steuereinheit 36 in Verbindung steht. Auch hier erfolgt die Rückführung des Druckmediums über ein weiteres Magnetventil 60 in den Vorratsbehälter 48.

Sofern ein Antiblockierregelfall auftritt, wird das Magnetventil 60 geschlossen und hierdurch das Bremspedal 1 arretiert, da weder eine Zu- noch eine Abfuhr von Druckmedium aus der Servobremskammer 4 erfolgen kann. Dagegen erfolgt über die Magnetventile 49 bzw. 54 eine Modulierung des Druckes in dem Druckraum 13, wobei mit Hilfe des bekannten hydraulischen Multiplexverfahrens der Druck in den Radbremszylindern 25,26,29 und 30 über die Magnetventile 23,24,33 bzw. 34 ebenfalls moduliert wird. Trifft bei dieser Druckmodulation der erste Hauptbremszylinderkolben 12 auf die Kolbenstange 10, so wird durch Öffnen des Magnetventils 58 das Bremspedal 1 über die Pedalstange 2 bzw. den Servobremskolben 8 zurückgeschoben, um so einen größeren Rückführweg des ersten Hauptbremszylinderkolbens 12 zu ermöglichen. Hierdurch wird ein vollständiger Druckabbau von Bremsdruck aus den Radbremszylindern 25,26,29 bzw. 30 erreicht.

Sollte der Fall einer Antriebsschlupfregelung auftreten, werden die Magnetventile 33,34 oder 23,24 der nicht angetriebenen Räder geschlossen und der Bremsdruck durch Auf-bzw. Abbau eines Druckes in dem Druckraum 13 über die Magnetventile 49 bzw. 54 moduliert. Die Modulation des Bremsdruckes direkt an den Rädern erfolgt dabei wieder über die entsprechenden Magnetventile mit Hilfe des hydraulischen Multiplexverfahrens.

## Ansprüche

1. Verfahren zur Regelung eines Bremsdruckes in einer Bremskammer mittels eines Hauptbremszylinderkolbens, dem eine Pedal- bzw. Kolbenstange od. dgl. zugeordnet ist, die von einer auf ein Bremspedal wirkenden Bremskraft beaufschlagt wird, dadurch gekennzeichnet, daß der Hauptbremszylinderkolben bei Beaufschlagung des Bremspedals mit Bremskraft abhängig vom Pedalweg unter Druck gesetzt wird und einen größeren Weg zurücklegt als die Pedal-bzw. Kolbenstange.

2. Verfahren nach Anspruch 1, dadurch gekennzeichnet, daß sowohl der Weg des Bremspedals bzw. der Kolbenstange als auch der Weg des Hauptbremszylinderkolbens ermittelt wird und der gewünschte größere Weg des Hauptbremszylinderkolbens über eine Steuereinheit durch Vergleich der Ist-Werte mit dem gewünschten Soll-Wert durch Beaufschlagung des Hauptbremszylinderkolbens erzielt wird.

3. Bremsanlage mit einem Hauptbremszylinder, in dem zumindest ein Hauptbremszylinderkolben und eine Bremskammer zur Bremskraftbeaufschlagung von Radbremszylindern unter Zwischenschaltung von Ventilen vorgesehen ist, wobei die Bremskraft von einem Bremspedal auf eine Pedal- bzw. Kolben stange einwirkt, dadurch gekennzeichnet, daß dem Hauptbremszylinderkolben (12) ein Druckraum (13) vorgeschaltet ist, der über eine Leitung (45) mit einem Vorratsbehälter (48) für Druckmedium in Verbindung steht.

4. Bremsanlage nach Anspruch 3, dadurch gekennzeichnet, daß in die Versorgungsleitung (45) eine ggfs. über einen Motor (47) betreibbare Pumpe (46) eingeschaltet ist.

5. Bremsanlage nach Anspruch 3 oder 4, dadurch gekennzeichnet, daß in die Versorgungsleitung (45) ein Ventil (49) zum Steuern des Zuführens und ein Ventil (54) zum Steuern des Rückführens von Druckmedium eingeschaltet ist.

6. Bremsanlage nach einem der Ansprüche 3 bis 5, dadurch gekennzeichnet, daß sowohl dem Bremspedal (1) wie auch dem Hauptbremszylinderkolben (12) ein Wegsensor (39 bzw. 40) zugeordnet ist und beide mit einer Steuereinheit (36) in Verbindung stehen.

7. Bremsanlage nach Anspruch 6, dadurch gekennzeichnet, daß auch die Ventile (49,54) sowie der Motor (47) der Pumpe (46) von der Steuereinheit (36) ansteuerbar sind.

8. Bremsanlage nach einem der Ansprüche 5 bis 7, dadurch gekennzeichnet, daß in eine Leitung (50) zwischen Pumpe (46) und Ventil (49) ein Speicher (51) und ggfs. ein Druckbegrenzungsventil (52) einmündet.

9. Bremsanlage nach wenigstens einem der Ansprüche 3 bis 8, dadurch gekennzeichnet, daß die Pedal- bzw. Kolbenstange (2,10) mit einem Servobremskolben (8) in einer Servobremskammer (4) in Verbindung stehen, die einen Anschluß über eine Abzweigung (57) an den Vorratsbehälter (48) besitzt.

10. Bremsanlage nach Anspruch 9, dadurch gekennzeichnet, daß in die Abzweigung (57) ein Ventil (58) bzw. ein Ventil (60) zum Zu- bzw. Abführen von Druckmedium zur bzw. aus der Servobremskammer (4) eingeschaltet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2565184 (BOSCH)<br>* das ganze Dokument *<br>--- | 1-10 | B60T8/32<br>B60T13/14 |
| A | GB-A-2194606 (TEVES)<br>* Zusammenfassung; Figur 1 *<br>--- | 1-10 | |
| A | FR-A-2579542 (BOSCH)<br>* Seite 6, Zeile 32 - Seite 7, Zeile 18; Figur 1 *<br>--- | 1 | |
| A | DE-A-3633687 (BOSCH)<br>* Zusammenfassung; Figur 1 *<br>----- | 1 | |
| | | | **RECHERCHIERTE SACHGEBIETE (Int. Cl.5 )**<br><br>B60T |

Der vorliegende Recherchenbericht wurde für alle Patentansprüche erstellt

| Recherchenort | Abschlußdatum der Recherche | Prüfer |
|---|---|---|
| BERLIN | 25 OKTOBER 1990 | BLURTON M.D. |

EPO FORM 1503 03.82 (P0403)